# EUROPEAN PATENT SPECIFICATION

(11) **EP 3 083 157 B1**
(45) Date of publication and mention of the grant of the patent: **27.11.2019**
(21) Application number: 14824136.7
(22) Date of filing: 18.12.2014
(51) Int. Cl.: B25F 5/00, B25D 17/20, B25D 11/00, B25D 16/00, B25D 17/04, B25F 5/02

(54) **POWER-ACTUATED TOOL**
STROMBETRIEBENES WERKZEUG
OUTIL MOTORISÉ

(30) Priority: 20.12.2013 JP 2013263243; 20.12.2013 JP 2013264052
(43) Date of publication of application: 26.10.2016
(73) Proprietor: Koki Holdings Co., Ltd., Tokyo 108-6020 (JP)
(72) Inventor: HASHIMOTO, Hideyuki, Hitachinaka-shi Ibaraki 312-8502 (JP); KIKUCHI, Atsuyuki, Hitachinaka-shi Ibaraki 312-8502 (JP); YAMAZAKI, Shingo, Hitachinaka-shi Ibaraki 312-8502 (JP); KANBE, Kuniaki, Hitachinaka-shi Ibaraki 312-8502 (JP); ABE, Satoshi, Hitachinaka-shi Ibaraki 312-8502 (JP); TANABE, Daijiro, Hitachinaka-shi Ibaraki 312-8502 (JP); OOKUBO, Takahiro, Hitachinaka-shi Ibaraki 312-8502 (JP)
(74) Representative: Parker, Andrew James
(86) International application number: PCT/JP2014/006326
(87) International publication number: WO 2015/093057

(56) References cited:
- EP-A1- 1 715 565
- EP-A1- 2 103 396
- WO-A1-2013/027365
- WO-A1-2013/122108
- JP-A- 2006 212 758
- JP-A- 2011 148 069
- US-A1- 2003 107 273

## Description

### Technical Field

This invention relates to an electric power tool configured to drive a tip tool by an electric motor.

### Background Art

As an electric power tool configured to drive a tip tool by an electric motor serving as a driving source, hammer, hammer drill, grinder and the like are known. Each of the hammer and the hammer drill has a drill bit, anchor drill and the like serving as a tip tool, and is also referred to as "impact tool". These impact tools are used to cause the tip tool to apply an impact to a workpiece, or to rotate the tip tool while applying an impact to a workpiece. The grinder is an electric power tool for rotating a grinding wheel serving as the tip tool to grind a workpiece, and also referred to as "disc grinder" or "disc sander". In addition, impact driver, impact wrench, and cutter are known as an electric power tools for driving a tip tool to machine a workpiece.

An electric power tool includes: an electric motor for driving a tip tool; and a motion converting mechanism for converting the rotation motion of a motor output shaft into rotation motion or impact-applying motion of the tip tool. For example, patent literature 1 discloses an impact tool working as an electric power tool which causes a tip tool to apply impact to a workpiece. According to this impact tool, a piston is reciprocably housed in a cylinder fitted with a tool holder, and an electric motor for driving the piston is incorporated in a housing. Other examples are disclosed in PTL2-PTL8.

### Citation List

### Patent Literature

PTL 1: Japanese Patent Application Laid-Open Publication No.: 2007-331072
PTL 2: EP 2 103 396 A1 (MAX CO LTD [JP]) 23 September 2009
PTL 3: WO 2013/122108 A1 (MAKITA CORP [JP]) 22 August 2013
PTL 4: JP 2011 148069 A (HITACHI KOKI KK) 4 August 2011
PTL 5: EP 1 715 565 A1 (HITACHI KOKI KK) 25 October 2006
PTL 6: WO2013/027365 A1 (HITACHI KOKI KK) 28 February 2013
PTL 7 JP 2006 212758 A (HITACHI KOKI KK) 17 August 2006
PTL 8: US 2003/107273 A1 (IKEDA TOMOYA) 12 June 2003

### Summary of Invention

### Technical Problem

In order to cool the electric motor, the motor output shaft is provided with a fan. Cooling air generated by the fan flows through a gap between the rotor and the stator of the electric motor so as to cool the electric motor.

In order to control the rotation number of the electric motor, a control board having a motor control circuit is disposed in the housing of the electric power tool. A conventional electric power tool does not have a mechanism for cooling the control board. When a brushless motor is used as the electric motor, however, the cooling performance of the control board must be improved. The brushless motor has an inverter circuit provided with a switching element for controlling a commutation action on a coil. Since the switching element is mounted on the control board, and generates heat when performing a current control operation, it is necessary to cool the control board to suppress heat generated from the inverter circuit, thereby improving the durability of the motor control circuit.

An object of the present invention is to improve the cooling characteristics of a motor control circuit which controls a motor for driving a tip tool.

Another object of the present invention is to improve the cooling characteristics of a motor for driving a tip tool.

### Solution to Problem

According to the invention, the problem is solved by means of an electric power tool as defined in independent claim 1. Advantageous further developments of the electric power tool according to the invention are set forth in the dependent claims.

### Advantageous Effects of Invention

According to the present invention, since the control board is disposed adjacent to the motor housing made of aluminum alloy, when heat is released from such an electronic component as a switching element making up the motor control circuit mounted on the control board, heat from the electronic component is transmitted to the motor housing having a heat dissipation property. Therefore, cooling characteristics, that is, heat dissipation characteristics of the motor control circuit of the brushless motor are improved.

### Brief Description of Drawings

[Fig. 1A] Fig. 1A is a perspective view showing an appearance of an impact tool as one example of an electric power tool.
[Fig. 1B] Fig. 1B is a perspective view showing an appearance of an impact tool as a variation.
[Fig. 2] Fig. 2 is a longitudinal sectional view of the impact tool shown in Fig. 1A.
[Fig. 3] Fig. 3 is an enlarged sectional view showing a principal part of Fig. 2.
[Fig. 4] Fig. 4 is a sectional view taken along a line A-A in Fig. 3.
[Fig. 5] Fig. 5 is a sectional view taken along a line B-B in Fig. 3.
[Fig. 6] Fig. 6 is a block diagram showing a motor control circuit.
[Fig. 7] Fig. 7 is a sectional view showing a principal part of the impact tool as a variation.
[Fig. 8] Fig. 8 is a sectional view taken along a line C-C in Fig. 7.
[Fig. 9] Fig. 9 is a sectional view showing a principal part of the impact tool as another variation.
[fig.10]Fig. 10 is a sectional view taken along a line D-D in Fig. 9.
[fig.11]Fig. 11 is a sectional view showing a principal part of the impact tool as still another variation.
[fig.12]Fig. 12 is a sectional view showing a principal part of the impact tool as further variation.
[fig.13]Fig. 13 is a sectional view taken along a line E-E in Fig. 12.
[fig.14]Fig. 14 is a sectional view showing a principal part of the impact tool as further variation.
[fig.15]Fig. 15 is a sectional view taken along a line F-F in Fig. 12.
[fig.16]Fig. 16 is a longitudinal sectional view showing
[fig.17]Fig. 17 is an enlarged sectional view taken along a line G-G in Fig. 16.
[fig.18]Fig. 18 is a plan view showing a principal part of a grinder as another example of the electric power tool.
[fig.19]Fig. 19 is a longitudinal sectional view of Fig. 18.
[fig.20]Fig. 20 is an enlarged sectional view showing a principal part of the grinder.
[fig.21]Fig. 21 is a sectional view taken along a line H-H in Fig. 20.

### Description of Embodiments

Hereinafter, embodiments of the present invention will be described in detail with reference to the drawings. In the drawings, members the same as each other are denoted by the same reference characters.

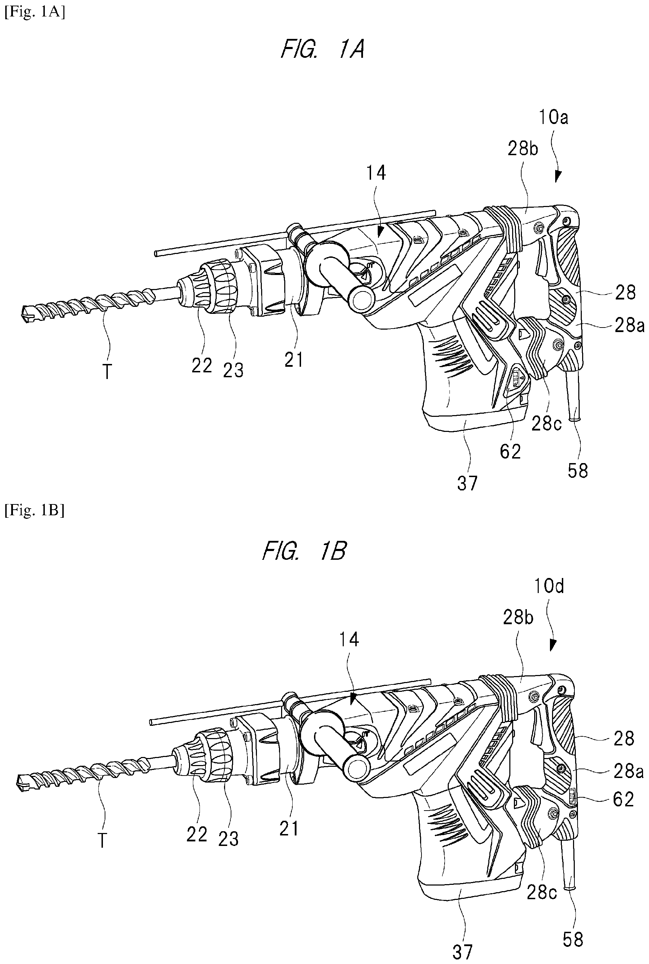

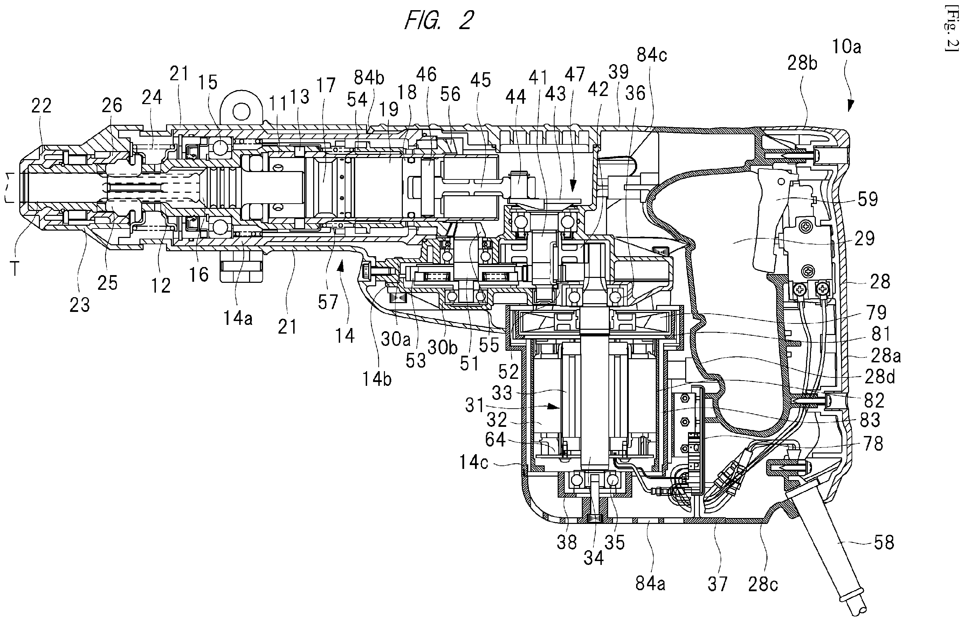

An electric power tool shown in FIGS. 1A and 2 is an impact tool 10a also referred to as "hammer drill". The impact tool 10a has a drill bit, that is, a tip tool "T" detachably attached thereto. Rotation and impact are applied to the drill bit, i.e., tip tool "T" when the impact tool 10a is used to perform a holing process, etc., on a workpiece, such as concrete and stone. The impact tool 10a is used in two work modes, i.e., an impact mode for applying impact to the tip tool "T" and a rotation/impact mode for applying impact to the tip tool "T" and rotating the tip tool "T".

As shown in FIG. 2, the impact tool 10a has a cylinder 11 to which the tip of a cylindrical tool holder 12 is fixed with a pin 13. The tool holder 12 is supported on a cylinder housing 14a via a bearing 15. The cylinder 11 and the tool holder 12 are rotatably attached in the cylinder housing 14a. When the cylinder 11 is rotated with the tool holder 12 holding the tip tool "T" attached thereto, the tip tool "T" is rotated.

A tip part of a hammer 16 is incorporated in the base end of the tool holder 12 so that the hammer 16 can be reciprocated in an axial direction, while the base end of the hammer 16 projects into the cylinder 11. In the cylinder 11, a striker 17 for applying impact to the hammer 16 is attached and axially reciprocable, and a piston 18 is fitted in the rear end part of the cylinder 11 and axially reciprocable. An air compartment 19 is formed between the striker 17 and the piston 18. When the piston 18 is driven forward, the piston 18 compresses air inside the air compartment 19, thereby driving the striker 17 forward, and the striker 17 strikes the hammer 16, thereby applying the impact of the striker 17 to the tip tool "T" via the hammer 16.

The cylinder housing 14a is fitted with a front end cover 21 making up part of the cylinder housing 14a. A rubber end cap 22 is attached to the tip of the tool holder 12. An attachable/detachable sleeve 23 is attached to the exterior of the end cap 22 and axially reciprocable, and attachable/detachable sleeve 23 is kept pushed by a spring force applied thereto by a coil spring 24 in the direction of moving away from the cylinder housing 14a, that is, the forward direction. The tool holder 12 is fitted with a radially movable engagement roller, i.e., engagement member 25 which engages with a groove formed on the tip tool "T". The attachable/detachable sleeve 23 has a fastening ring 26. As shown in FIG. 2, when the fastening ring 26 forces the engagement member 25 to project radially inward, the tip tool "T" is fastened to the tool holder 12. When the attachable/detachable sleeve 23 is moved backward against the spring force, the fastening ring 26 is disengaged from the engagement member 25. In this state, pulling the tip tool "T" causes the engagement member 25 to move radially outward, which allows the tip tool "T" to be removed. In contrast, when the tip tool "T" is inserted in the tip of the tool holder 12 and the tool holder 12 is moved forward by the spring force with the attachable/detachable sleeve 23 is held in its moved backward position, the tip tool "T" is attached to the tool holder 12 and is fastened by the engagement member 25.

A gear housing 14b is formed on the rear end part of the cylinder housing 14a, and a motor housing 14c is connected to the gear housing 14b. The motor housing 14c is set almost right angles with the cylinder housing 14a. These housings 14a to 14c make up a housing 14 of the impact tool 10a. On the rear part of the housing 14, an operating handle 28 is provided so as to project backward. The handle 28 has a body 28a extending almost perpendicular to the cylinder 11 and two legs 28b and 28c formed on both ends of the body 28a such that they are separated from each other across the body 28a. The upper end of the body 28a, i.e., part of the body 28a which is closer to the gear housing is connected integrally to the leg 28b on the upper side, while the lower end of the body 28a, i.e., the part of body 28a which is closer to the motor housing is connected integrally to the leg 28c on the lower side. Both legs 28b and 28c are connected integrally via a connection wall 28d, which makes up the housing 14. The legs 28b and 28c are attached to the back face of the housing 14, and a grip space 29 is formed between the body 28a and the housing 14. When a worker holds the body 28a of the handle 28 and uses the impact tool 10a to carry out a holing process, etc., on a workpiece, the worker puts his or her fingers in the grip space 29. The connection wall 28d forms the back wall of the housing 14 and is counter to the body 28a of the handle 28. The surface of body 28a which faces the grip space 29 is therefore counter to the back face of the housing 14.

When the worker carries out work using the impact tool 10a, the worker usually holds the handle 28 in his or her hand so that the leg 28b is located on the upper side, that is, the cylinder housing 14a is located above the motor housing 14c. The vertical positional relation between the leg 28b and the leg 28c and between the cylinder housing 14a and the motor housing 14c as shown in FIG. 2 indicates the position of the impact tool 10a in its normal use. The cylinder housing 14a and the motor housing 14c are assembled together via the gear housing 14b, which is composed of an upper side part 30a closer to the cylinder housing 14a and a lower side part 30b closer to the motor housing 14c.

The motor housing 14c has a brushless motor 31 housed therein. The brushless motor 31 has a cylindrical stator 32 wound with coils, and a rotor 33 incorporated in the stator 32. The rotor 33 is fitted with an output shaft 34, which is set in the direction perpendicular to the reciprocation direction of the cylinder 11, and outputs the rotating drive force of the motor 31. The base end of the output shaft 34 is supported rotatably by a bearing 35, while the output end of the output shaft 34 is supported rotatably by a bearing 36. The bearing 35 is incorporated in a retainer 38 connected integrally to the bottom wall of the motor housing 14c to make up part of the motor housing 14c. The retainer 38 is covered with a bottom cover 37 attached to the housing 14. The bearing 36 is attached to the lower side portion 30b of the gear housing 14b. To the top face of the rear side of the housing 14, a top cover 39 is attached. Each of the top cover 39 and the bottom cover 37 makes up part of the housing 14.

To convert the rotation of the output shaft 34 of the motor 31 into the reciprocation of the piston 18, a crankshaft 41 is rotatably attached in the gear housing 14b. The crankshaft 41 is set parallel with the output shaft 34 and is located closer to the tool holder. A large-diameter pinion gear 42 fitted on the crankshaft 41 is engaged with a gear fitted on the tip of the output shaft 34. To the tip of the crankshaft 41, an eccentric member 43 functioning as a crank weight is attached, and the eccentric member 43 has a crankpin 44 attached at a location eccentric to the rotation center of the crankshaft 41. One end of a connecting rod 45 is fitted rotatably in the crankpin 44, while the other end of the same is fitted swingably in a piston pin 46 attached to the piston 18. Hence the rotation of the crankshaft 41 driven by the output shaft 34 is converted into the reciprocation of the piston 18 perpendicular to the output shaft 34 through a motion converting mechanism 47 composed of the eccentric member 43, the connecting rod 45, etc. The eccentric member 43, the crankpin 44, etc., are covered with the top cover 39.

To transmit the rotation of the output shaft 34 to the cylinder 11 to rotate it, a rotation transmission shaft 51 is supported rotatably in the gear housing 14b. The rotation transmission shaft 51 is fitted with a large-diameter pinion gear 53 which engages with a small-diameter pinion gear 52 fitted on the crankshaft 41. Through a motion converting mechanism having such gears, the rotation of the output shaft 34 is transmitted to the rotation transmission shaft 51. A driven sleeve 54 is fitted on the exterior of the cylinder 11 and axially movable. On the base end of the driven sleeve 54, a driven bevel gear 56 is provided, which is engaged with a driving bevel gear 55 fitted on the tip of the rotation transmission shaft 51. A key member (not shown) is provided between the driven sleeve 54 and the cylinder 11. When the driven sleeve 54 is moved backward to a position at which the driven bevel gear 56 engages with the driving bevel gear 55, the driven sleeve 54 is engaged with the cylinder 11 via the key member, as shown in FIG. 2. As a result, the rotation of the output shaft 34 is transmitted to the cylinder 11 to rotate it, in which case the impact tool 10a operates in its rotation/impact mode. In contrast, when the drive sleeve 54 is moved forward, the driven sleeve 54 is disengaged from the cylinder 11, in which case no torque is transmitted to the cylinder 11 and therefore the impact tool 10a operates in its impact mode.

To apply a spring force to the driven sleeve 54 in the direction of moving it backward, a coil spring 57 is attached in the cylinder housing 14a. To move the driven sleeve 54 to a position of engagement with the driving bevel gear 55 and to a position of disengagement from the driving bevel gear 55, a mode shifting lever (not shown) is provided to the housing 14. The worker operates the lever to shift the work mode to the impact mode for applying impact to the tip tool "T" and to the rotation/impact mode for applying impact to the tip tool "T" and rotating the tip tool "T".

The brushless motor 31 is supplied with power from a commercial power supply, and a feeder cable 58 is attached to the handle 28. FIG. 2 shows part of the feeder cable 58, which has a plug (not shown) attached to its tip. To switch the operation state of the motor 31 between a state of drive and a state of stoppage, a trigger switch, i.e., operating switch 59 is provided to the body 28a of the handle 28, as shown in FIG. 2.

The housing 14 is provided with a pilot lamp (not shown) serving as an indicator means. This pilot lamp turns on when the plug is inserted in a commercial power supply socket. As shown in FIG. 1(A), a speed setting dial 62 serving as a speed setting means for inputting the rotating speed of the motor 31 is disposed on a side face of the rear of the housing 14. This speed setting dial 62 is operated to input the rotating speed of the motor 31. To indicate the rotating speed of the motor 31, a speed indicator (not shown) serving as an indicator means is disposed on the housing 14. Speed setting means include a dial-type means and a button-type means, and the above dial-type speed setting means may be replaced with a button-type speed setting means. An abnormal condition indicating lamp may be provided to the housing 14, as an indicator means which turns on when a load applied to the tip tool "T" becomes equal to or larger than a given load.

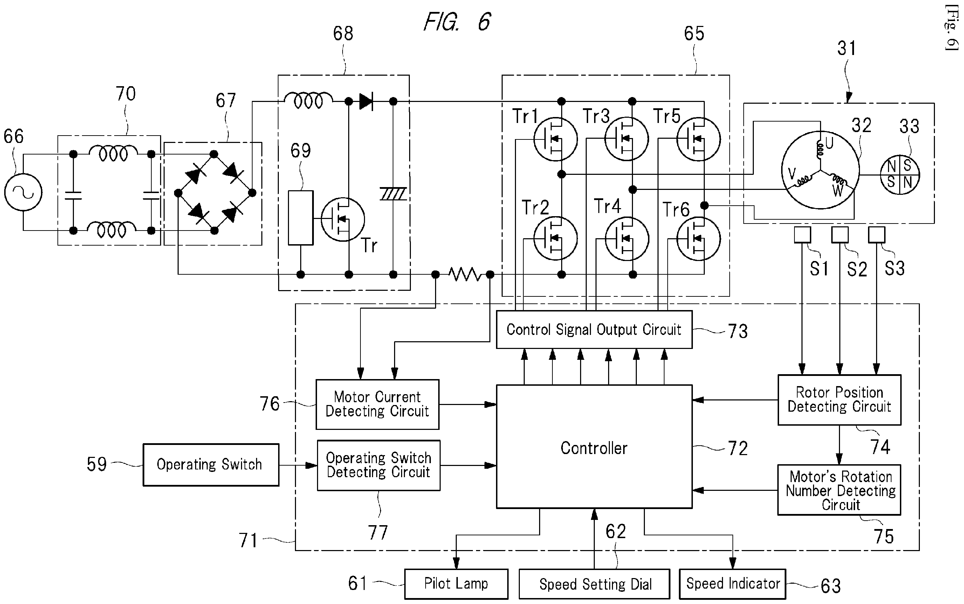

FIG. 6 is a block diagram of a motor control circuit for controlling the rotating speed of the brushless motor 31. As shown in FIG. 6, the stator 32 of the brushless motor 31 is wound with a U-phase coil, a V-phase coil, and a W-phase coil, and the rotor 33 is provided with four permanent magnets arranged circumferentially at intervals. To detect the rotation position of the rotor 33, the motor control circuit has three hall elements S1 to S3 corresponding to the coils of three phases and working as a rotation position detecting sensor. The hall elements S1 to S3 are mounted on a sensor board 64 shown in FIG. 2. Each of the hall elements S1 to S3 is a magnetic field detecting element which outputs a detection signal when finding by magnetic flux detection that the polarity of the rotor 33 is at the neutral point between its N pole and S pole. Based on a detection signal from each of the hall elements S1 to S3, the position of the rotor 33 is detected and a commutation action on each coil, i.e., current-supply switching action on the coil is carried out. The rotation position detecting sensor is not limited to the hall elements but may be provided as a hall IC made up of a hall element and an electronic circuit functioning as a comparator which are packaged in a single chip.

The motor control circuit has an inverter circuit 65 for controlling a drive current for the U-phase coil, the V-phase coil, and the W-phase coil. The inverter circuit 65 is supplied with power via a rectifying circuit 67 for rectifying an alternating current from a commercial power supply 66 into a direct current, and a power factor correcting (PFC) circuit 68 for raising a rectified DC voltage and supplying the raised DC voltage to the inverter circuit 65. The power factor correcting circuit 68 has an IC 69 for outputting a PWM control signal to a transistor Tr composed of a MOSFET (Metal-Oxide Semiconductor Field-Effect Transistor), thus keeping a higher harmonic current generated by switching elements in the inverter circuit 65 equal to or lower than a limit current through PWM control. Between the power supply 66 and the rectifying circuit 67, a noise-suppressing circuit 70 is provided, which prevents noises generated by the inverter circuit 65, etc., from reaching the power supply.

The inverter circuit 65 is a three-phase full-bridge inverter circuit and has a pair of switching elements Tr1 and Tr2, a pair of switching elements Tr3 and Tr4, and a pair of switching elements Tr5 and Tr6, each pair of switching elements being connected in series with each other, and respectively connected to the positive output terminal and the negative output terminal of the power factor correcting circuit 68. Three switching elements Tr1, Tr3, and Tr5 connected to the positive output terminal are high-side switching elements, while three switching elements Tr2, Tr4, and Tr6 connected to the negative output terminal are low-side switching elements. To a midpoint between the two switching elements Tr1 and Tr2, one connection terminal of the U-phase coil is connected. To a midpoint between the two switching elements Tr3 and Tr4, one connection terminal of the V-phase coil is connected. To a midpoint between the two switching elements Tr5 and Tr6, one connection terminal of the W-phase coil is connected. The other connection terminals of the U-phase, V-phase, and W-phase coils are connected to each other. Hence, the overall connection pattern of the coils is star connection. The connection pattern, however, may be delta connection. A MOSFET is used as each of the switching elements Tr1 and Tr6. For example, when a control signal is supplied to the gate of the high-side switching element Tr1, and to the gate of the low-side switching element Tr4, a current is supplied to the U-phase coil, and to the V-phase coil. Hence, by adjusting timing of supplying a control signal to each switching element, a commutation action on each switching element is controlled.

A motor control unit 71 for calculating a control signal and outputs it to the inverter circuit 65 has a controller 72, which sends a control signal to the inverter circuit 65 via a control signal output circuit 73. Each of the hall elements S1 to S3 serving as the rotation position detecting sensor sends a detection signal to a rotor position detecting circuit 74, which sends a signal to a motor's number of revolution detecting circuit 75, which outputs a signal corresponding to the motor's number of revolution, to the controller 72. A motor current detecting circuit 76 for detecting a current flowing through the motor 31 sends a detection signal corresponding to a motor current, to the controller 72. The controller 72 has a microprocessor for calculating a control signal, and a memory storing therein a control program, a calculation formula, data, etc.

When the worker presses the operating switch 59 of Fig. 2, an on-and-off detection signal is sent through an operating switch detecting circuit 77 to the controller 72. A pilot lamp 61 is connected to the controller 72, and when the plug of the feeder cable 58 is inserted in the commercial power supply socket, a turn-on signal is sent to the pilot lamp 61. The speed setting dial 62 is connected to the controller 72, and the motor 31 is driven to rotate at a rotating speed set by operating the speed setting dial 62. The number of revolutions of the motor, i.e., rotating speed of the motor is controlled by adjusting a voltage supplied to each coil. Voltage to the coils is controlled through PWM control over the switching elements by which the duty ratio of an on-signal applied to the gate of each of the switching elements Tr1 to Tr6 of the inverter circuit 65 is adjusted. For example, when the duty ratio is set to 20%, a voltage equivalent to 20% of an output voltage from the power factor correcting circuit 68 is supplied to each coil. When the duty ratio is set to 100%, the motor rotates with the maximum number of revolutions. To indicate a set rotating speed, a speed indicator 63 is connected to the controller 72. The inverter circuit 65, the rectifying circuit 67, the power factor correcting circuit 68, the motor control unit 71, etc., are mounted on the control board 78 of FIG. 2.

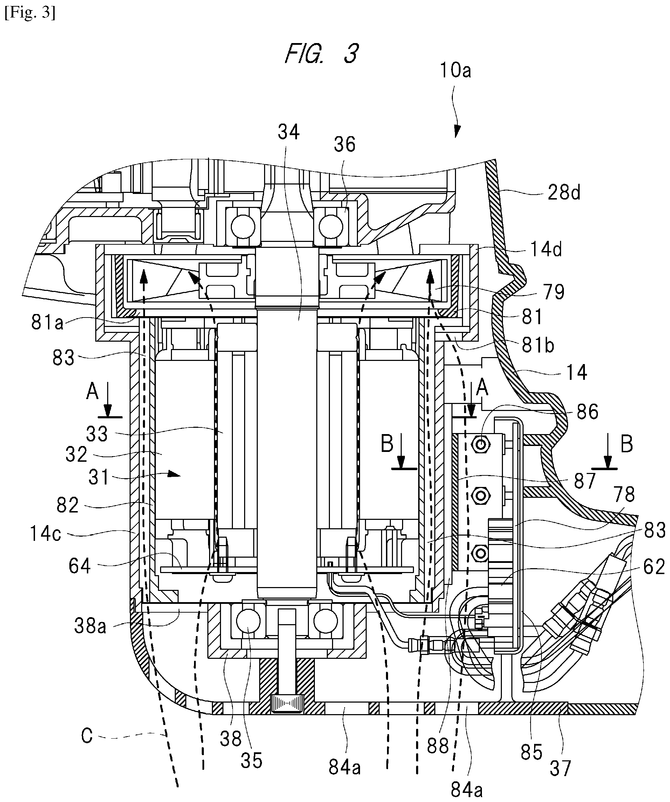

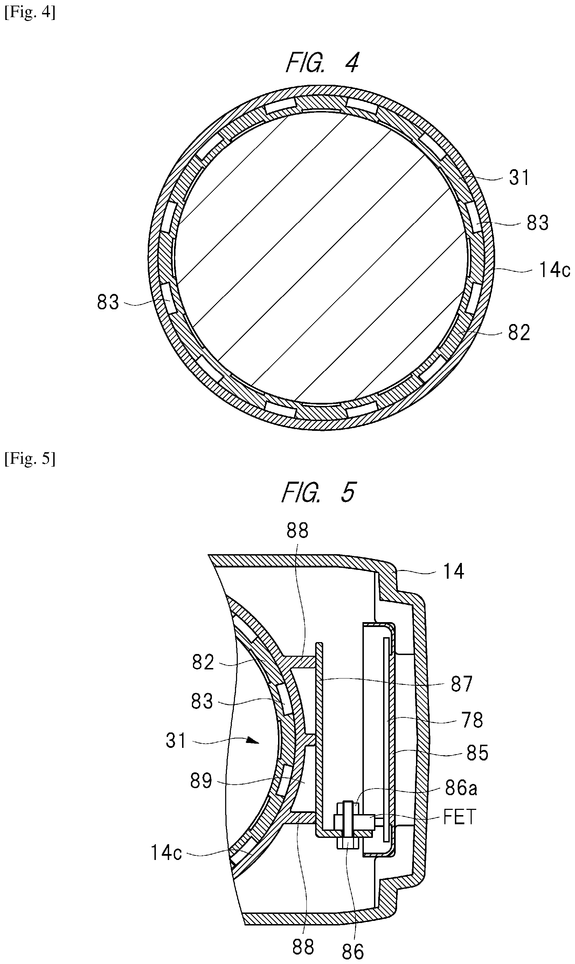

A fan 79 for generating cooling air is provided to the tip of the output shaft 34 of the motor 31, and the outer periphery of the fan 79 is covered with a cylindrical fan case 81. The fan 79 is an axial-flow fan, but may be provided as a centrifugal fan. As shown in FIGS. 3 to 5, the motor 31 has a resin motor case 82, which covers the cylindrical stator 32. The motor 31 is press fitted in a motor housing 14c made of aluminum alloy. Between the motor case 82 and the motor housing 14c, a cooling passage 83 allowing the cooling air to pass therethrough is formed, as shown in FIGS. 3 and 4. The cooling passage 83 is formed between multiple grooves formed axially on the outer peripheral surface of the motor case 82 and the motor housing 14c. However, multiple grooves may be formed not on the outer peripheral surface of the motor case 82 but on the inner surface of the motor housing 14c so that the grooves of the motor housing 14c form the cooling passage 83. The cooling air generated by the rotation of the fan 79 flows through a gap between the stator 32 and the rotor 33 and through the cooling passage 83 to cool the brushless motor 31. The cooling passage 83 may be created by forming grooves on the outer peripheral surface of the motor case 82 as well as on the inner peripheral surface of the motor housing 14c. The cooling passage 83 is, therefore, created by forming the grooves at least on the motor case 82 or on the motor housing 14c. In FIG. 4, the interior of the motor case 82 is not shown.

In this manner, the motor housing 14c is made of aluminum alloy, and is exposed to an exterior portion, or an outside, thereby improving the rigidity of the housing 14, and improving the durability of the electric power tool. Since the motor housing 14c has heat conductivity higher than that of the resin motor case 82, the motor 31 can be cooled via the motor case 82, and particularly the motor 31 can be cooled even with the fan 79 being not rotated.

Since the motor is covered with the resin motor case 82, the motor 31 has an insulating structure which suppresses transmission of power and magnetic force acting on the motor 31 to the worker. Specifically, the electric power tool has a structure such that the aluminum motor housing 14c is exposed to the outside to give the electric power tool the rigidity of the motor housing 14c and the resin motor case 82 is interposed between the motor housing 14c and the motor 31 to prevent transmission of power acting on the motor 31 to the worker.

As described above, the motor case 82 is made of resin, and the motor housing 14c is made of material having heat conductivity higher than that of the resin, such as aluminum alloy. As one structure of the motor housing 14c, the motor housing 14c may be made entirely of aluminum alloy, and as another structure, the motor housing 14c may be partly exposed to the outside, that is, one part of the motor housing 14c, which covers part on the same side of the tool holder 12, is made of aluminum alloy, and the other part of the same is made of resin. In both structures, at least one part of the motor housing 14c is made of aluminum alloy, so that the heat dissipation performance of the cooling air flowing through the cooling passage 83 to cool the brushless motor 31 is improved. Making the motor housing 14c out of aluminum alloy gives the motor housing 14c strength greater than that of the motor housing 14c made of resin.

As shown in Fig. 3, the bottom cover 37 is formed with air holes 84a, and the bottom wall of the motor housing 14c, provided with the retainer 38, is provided with an air hole 38a. As shown in Fig. 2, air holes 84b and 84c are formed on the front and rear end parts of the top cover 39 on the top of the housing 14, respectively. Another air hole (not shown) is also formed on a side face of the housing 14. When the output shaft 34 is driven, fresh air is sucked in through the air holes 84a to generate cooling air, which is then discharged out of the air holes 84b, 84c, etc., on the upper side of the housing 14. Hence, in the housing 14, a cooling air channel is formed, along which cooling air sucked in through the air holes 84a passes through the air hole 38a and then is discharged out of the air holes 84b, 84c, etc., as shown by a broken line arrow in Fig. 3.

In such a configuration in which the wind passage is formed between the motor case 82 and the motor housing 14c, cooling air is caused to flow through the gap between the stator 32 and the rotor 33, through the cooling passage 83 between the motor case 82 and the motor housing 14c, and along the exterior of the motor housing 14c. The motor 31, therefore, can be cooled from inside and outside with cooling air generated by the fan, and heat generation by the motor housing 14c can be suppressed. This allows the worker to hold the motor housing 14c easily. Even when the fan 79 is not rotating, the motor housing 14c is readily cooled through the cooling passage 83 between the motor case 82 and the motor housing 14c. The retainer 38 making up part of the motor housing 14c is made of aluminum alloy, so that heat generated by the bearing 35 is transmitted through the retainer 38 to the motor housing 14c, which is exposed to the outside, and therefore releases the transmitted heat.

As shown in FIGS. 3 and 5, the control board 78 is housed in a pedestal board 85. The control board 78 is adjacent to the motor housing 14c, that is, disposed adjacent to the motor housing 14c, and fixed axially along the outer peripheral surface of the motor housing 14c inside the housing 14. Since the control board 78 is disposed between the brushless motor 31 and the bottom cover 37 covering an end face of the brushless motor 31, and adjacent to the motor housing 14c, the control board 78 is situated in the cooling air channel created by the fan 79, thereby improving the cooling characteristics of the control board 78.

The control board 78 has six switching elements Tr1 to Tr6 making up the inverter circuit 65. Each switching element is an FET, so that FIG. 5 shows an FET serving as the switching element. The control board 78 has the inverter circuit 65, the power factor correcting circuit 68, the motor control unit 71, etc., but in Fig. 5, only the switching element FET is indicated on the control board 78 whose other components are omitted.

To the switching element FET, a heat dissipating board, i.e., heat sink 87 is fixed with a screw 86 and a nut 86a. The heat sink 87 is abutted against multiple projections 88 projecting from the motor housing 14c toward the control board 78. In this manner, the control board 78 is connected to the motor housing 14c via the projections 88. In this structure, the projections 88 form sections of heat dissipation spaces 89 allowing cooling air to pass therethrough between the outer peripheral surface of the motor housing 14c and the heat sink 87. The heat sink 87 is made of a material having heat conductivity higher than that of resin, iron, etc., such as aluminum alloy and copper alloy. By attaching the heat sink 87 to the switching element, therefore, the cooling characteristics of the control board 78 and the switching element mounted thereon can be improved by cooling air flowing through the cooling passage 83 inside the motor housing 14c, cooling air flowing along the surface of the heat sink 87 outside the motor housing 14c, and cooling air flowing between the heat sink 87 and the control board 78.

As shown in Fig. 3, an opening 81a allowing cooling air to flow therein is formed on the bottom wall of the fan case 81. A large-diameter part 14d covering the exterior of the fan case 81 is provided on the upper end of the motor housing 14c. The large-diameter part 14d has a communication hole 81b which guides the cooling air flowing along the exterior of the motor housing 14c and the cooling air flowing between the heat sink 87 and the control board 78, into the fan case 81.

In this manner, by disposing the control board 78 in the cooling air channel "C" indicated by a broken line arrow, a motor cooling air is used as cooling air for cooling the brushless motor 31, and also as cooling air for cooling a heat-generating electronic device such as the inverter circuit 65. Among electronic devices mounted on the control board 78, the switching elements making up the inverter circuit 65 which performs communication control and speed control on the coil generate plenty of heat. However, by disposing the control board 78 in the cooling air channel "C", it is possible to allow the motor cooling air to cool the inverter circuit 65, prevent the overheating of the switching elements to improve the durability of the control board 78 including the switching elements, and prevent transmission of heat generated by the control board 78 to the housing 14 to improve the workability of the impact tool 10a.

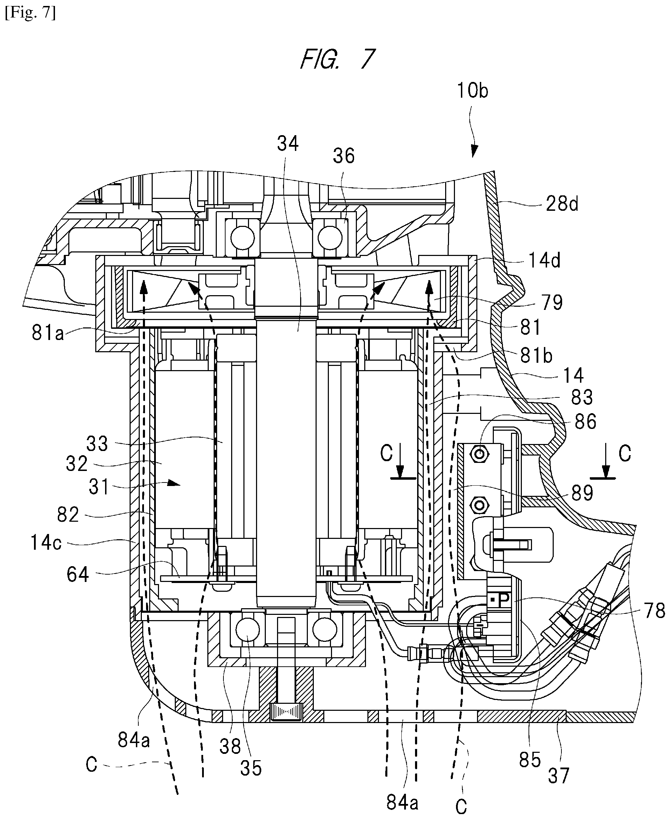

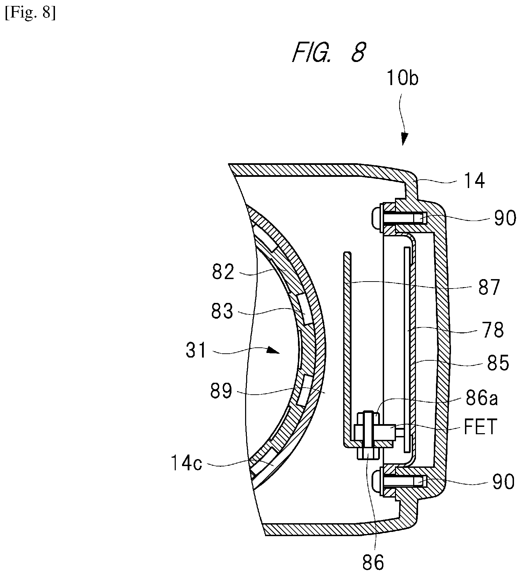

Fig. 7 is a sectional view of a principal part of an impact tool 10b as a variation. Fig. 8 is a sectional view taken along a line C-C of Fig. 7. According to the impact tool 10b, the projections 88 of Fig. 5 are not formed on the motor housing 14c. The heat sink 87 is separated from the surface of the motor housing 14c but is disposed close to the motor housing 14c. The heat dissipation space 89 is formed between the heat sink 87 and the outer peripheral surface of the motor housing 14c. The heat sink 87 is attached to the switching element FET with the screw 86, and the pedestal board 85 bearing the control board 78 is fixed to the housing 14 with a screw 90.

The heat sink 87 is disposed in the following two forms: the form shown in Fig. 5 in which the heat sink 87 is set in contact with the motor housing 14c and the form shown in Fig. 7 in which the heat sink 87 is disposed close to the motor housing 14c. In both forms, the control board 78 is disposed adjacent to the motor housing 14c, in which structure the cooling performance of the switching element can be improved via the heat sink 87.

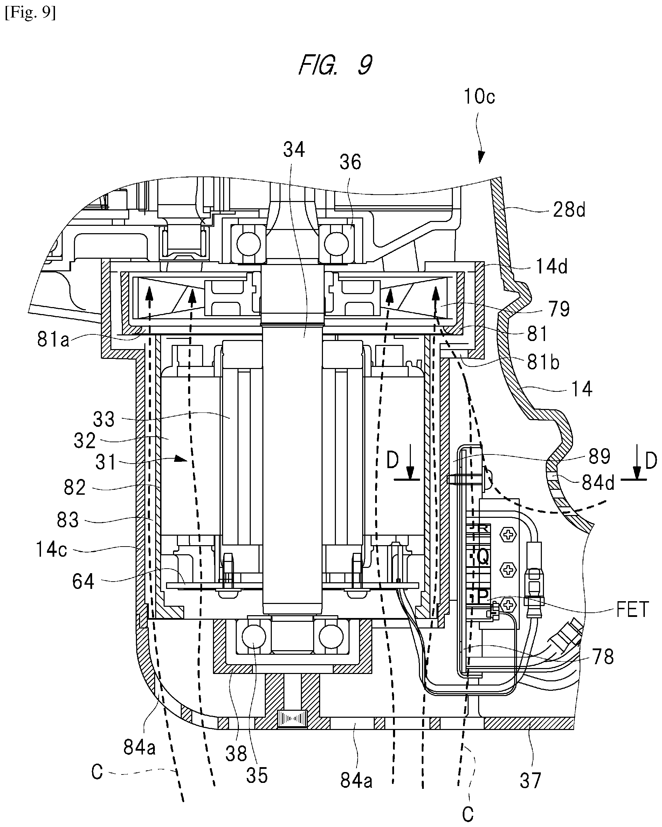

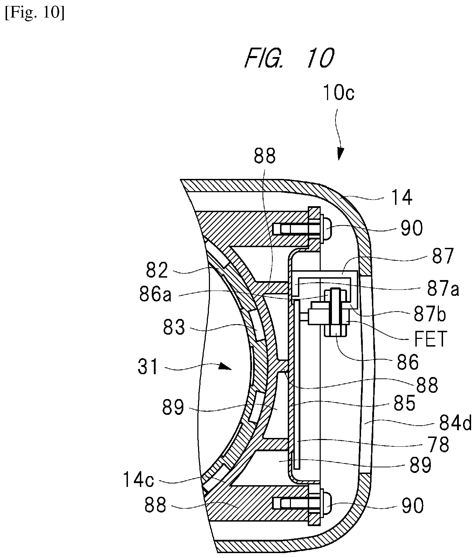

Fig. 9 is a sectional view of a principal part of an impact tool 10c as another variation. Fig. 10 is a sectional view taken along a line D-D of Fig. 9. According to the impact tool 10c, the motor housing 14c is provided with the projections 88 in the same manner as in the case of Fig. 5, and the pedestal board 85 is fixed to the projections 88 with the screw 90. In other words, the control board 78 with its front and back reversed from their positions of Fig. 5 is attached to the motor housing 14c. As shown in Fig. 10, the heat sink 87 has a quadrangular cross section, which shows that an abutment wall 87a is abutted against the pedestal board 85, and that the switching element FET is attached to an attachment wall 87b with the screw 86, the attachment wall 87b being perpendicular to the abutment wall 87a. The nut 86a screwed on the screw 86 is within a space encircled with the heat sink 87, into which space the cooling air flows.

As shown in Figs. 9 and 10, an air hole 84d is formed on the housing 14 so as to face the control board 78. Therefore, in the impact tool 10c of Figs. 9 and 10, when the fan 79 is driven, the cooling air is sent through the air hole 84d to the surface of the control board 78, in addition to the cooling air which is introduced through the air holes 84a formed on the bottom cover 37 so as to face the end of the motor 31.

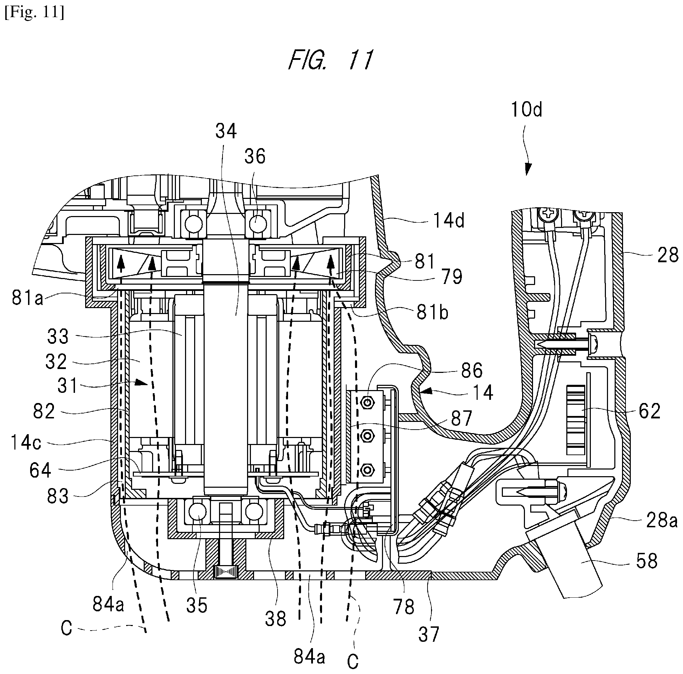

Fig. 11 is a sectional view of a principal part of an impact tool 10d as still another variation, showing part of the impact tool lOd, which is the same as part of the impact tool 10a shown in Fig. 3. The speed setting dial 62 of Fig. 2 mounted on the control board 78 is exposed to the outside on the side face of the housing 14. According to the impact tool lOd, the speed setting dial 62 is provided to the body 28a of the handle 28 such that, as shown in Fig. 1(B), the speed setting dial 62 is exposed on a side face of the body 28a.

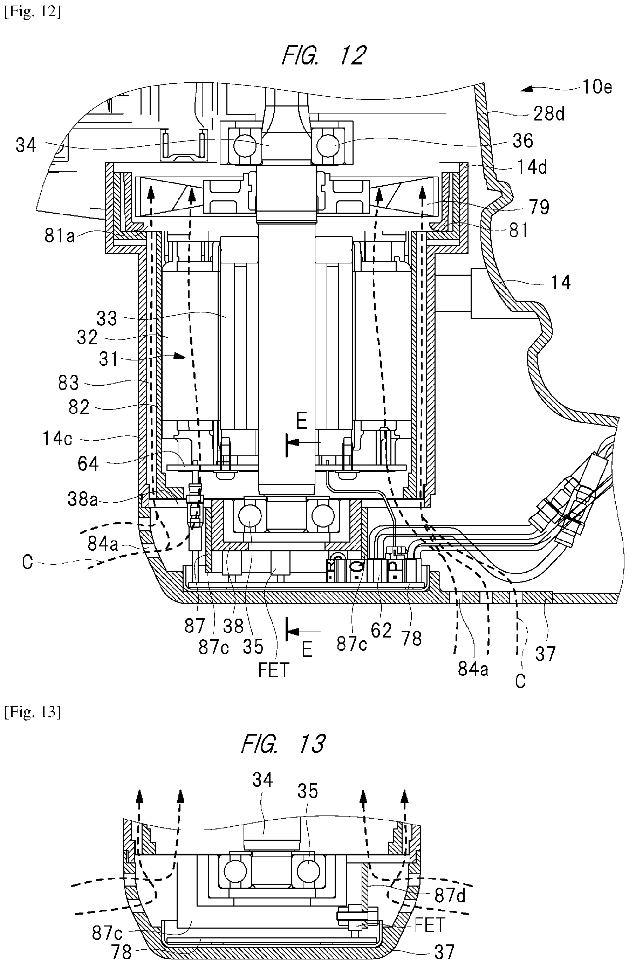

Fig. 12 is a sectional view of a principal part of an impact tool lOe as still another variation. Fig. 13 is a sectional view taken along a line E-E of Fig. 12. According to the impact tool 10e, the control board 78 is disposed on the bottom cover 37 making up part of the housing 14. The control board 78 has the speed setting dial 62, which is exposed on a side face of the bottom cover 37. The switching element FET is attached to the heat sink 87. The heat sink 87 has two parallel walls 87c parallel with each other and a connection wall 87d connecting respective ends of both parallel walls 87c. The heat sink 87 thus has a U-shaped cross section. Each parallel wall 87c is in contact with the retainer 38 in which the bearing 35 is incorporated, and the connection wall 87d forms a gap between the connection wall 87d and the retainer 38. The retainer 38 is made of aluminum alloy having high heat conductivity, and heat generated by the switching element FET is transmitted to the heat sink 87 and to the retainer 38. Because the heat sink 87 has an axially extending surface, the cooling air guided to the motor 31 flows along the heat sink 87. Hence the cooling performance of the switching element FET is improved.

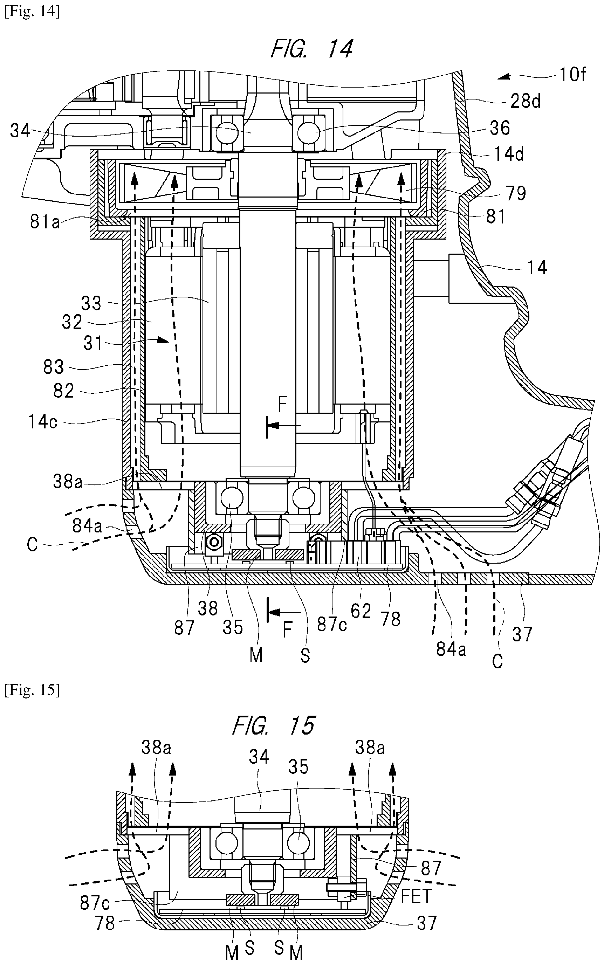

Fig. 14 is a sectional view of a principal part of an impact tool lOf as still another variation. Fig. 15 is a sectional view taken along a line F-F of Fig. 14. According to the impact tool lOf, in the same manner as the impact tool lOe of Figs. 12 and 13, the control board 78 is disposed on the inner surface of the bottom cover 37 and the speed setting dial 62 is mounted on the control board 78. According to the impact tool 10f, hall elements "S" serving as a detection means detecting the rotation position of the rotor 33 are mounted on the control board 78, where the hall elements "S" sensitively response to sensor-driving permanent magnets "M" provided to the base end of the output shaft 34 and send output signals to the rotor position detecting circuit 74 of Fig. 6. Four permanent magnets "M" are arranged in correspondence to the four permanent magnets arranged on the rotor 33 so that both groups of magnets match in phase in the rotation direction. Figs. 14 and 15 show two magnets and two hall elements "S" out of the four magnets and three hall elements "S". The heat sink 87 of the impact tool 10f has the same structure as that of the heat sink 87 of Fig. 12.

As shown in Figs. 12 to 15, in the structural form in which the control board 78 is disposed on the inner surface of the bottom cover 37, the cooling air flowing through the cooling passage 83 inside the motor housing 14c, the cooling air flowing along the outer periphery of the motor housing 14c, and the cooling air flowing along the surface of the control board 78 are created in the housing 14. As shown in Figs. 12 to 15, at least one part of the heat sink 87 is in contact with the retainer 38 made of aluminum alloy and the heat sink 87 is disposed close to the retainer 38. As a result, the control board 78 can be cooled by the motor housing 14c via the retainer 38.

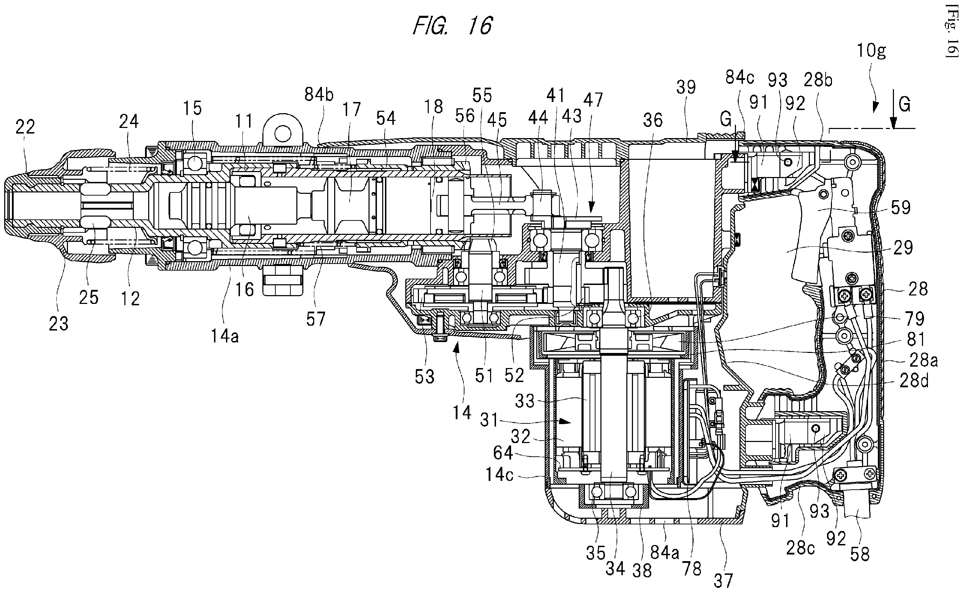

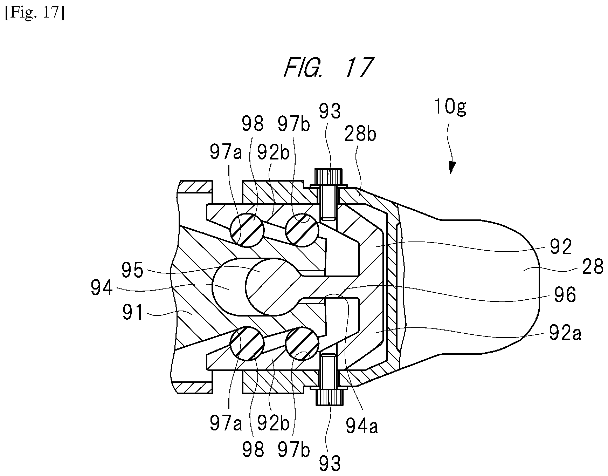

Fig. 16 is a sectional view of a principal part of an impact tool 10g as still another variation. Fig. 17 is a sectional view taken along a line G-G of Fig. 16. The impact tool 10g is different from the above impact tools in the direction of flow of the cooling air. According to the above impact tool 10a, etc., the air holes 84a formed on the bottom cover 37 serve as air intakes and the air holes 84b, 84c, etc., formed on the top of the housing 14 serve as discharge ports. According to the impact tool 10g, in contrast, the air holes 84a serve as discharge ports while the air holes 84b, 84c, etc., serve as air intakes. In other words, the cooling air flows through the cooling air channel "C" in the direction opposite to the direction in the above cases. In this manner, the cooling air flows through the cooling air channel "C" in the following two patterns: a pattern in which the cooling air flows from the base end of the motor 31 toward its tip and a pattern in which the cooling air flows from the tip of the motor 31 toward its base end. In the impact tool 10g, the pedestal board 85 bearing the control board 78 is abutted against the outer surface of the motor housing 14c.

If an air hole, i.e., an air intake is formed on the back face of the housing 14 as an additional air hole other than the air holes 84c, cooling air from the fan 79 is sucked in from the side of the grip space 29 of the handle 28 which is opposite to the tip tool "T". This offers an effect which dust hardly enters the impact tool.

As shown in Fig. 17, according to the impact tool 10g, a connection metal part 91 is attached to the rear end part of the housing 14 and a support metal part 92 having a U-shaped cross section is fixed inside the leg 28b of the handle 28 with screws 93. The support metal part 92 has a bottom wall 92a and side walls 92b formed integrally on both sides of the bottom wall 92a. The connection metal part 91 has a long hole 94 whose major axis extends in the axial direction of the cylinder 11, i.e., impact axis direction and which has an opening facing the support metal part 92 via a constricted part 94a. The support metal part 92 has a columnar part 95 capable of moving inside the long hole 94. This columnar part 95 is connected integrally to the bottom wall 92a of the support metal part 92 via a connection wall 96 having a width determined to be smaller than the outer diameter of the columnar part 95. A plurality of concaves 97a is formed on both sides of the connection metal part 91, while concaves 97b facing the respective concaves 97a are formed on the inner surfaces of the side walls 92b of the support metal part 92. The vibration-absorbing rubber elastic elements 98 are incorporated between the concaves facing each other, and a vibration-proof mechanism having the elastic elements 98 is incorporated in the leg 28b.

Another support metal part 92 similar to the above support metal part 92 is also fixed inside the leg 28c of the handle 28, and a connection metal part 91 fitted on this support metal part 92 is attached to the rear end part of the housing 14. In this manner, both legs 28b and 28c are connected to the housing 14 via the vibration-proof mechanisms shown in Fig. 17. As a result, vibrations transmitted from the housing 14 to the handle 28 are absorbed by the elastic elements 98. This improves the workability of the impact tool 10g.

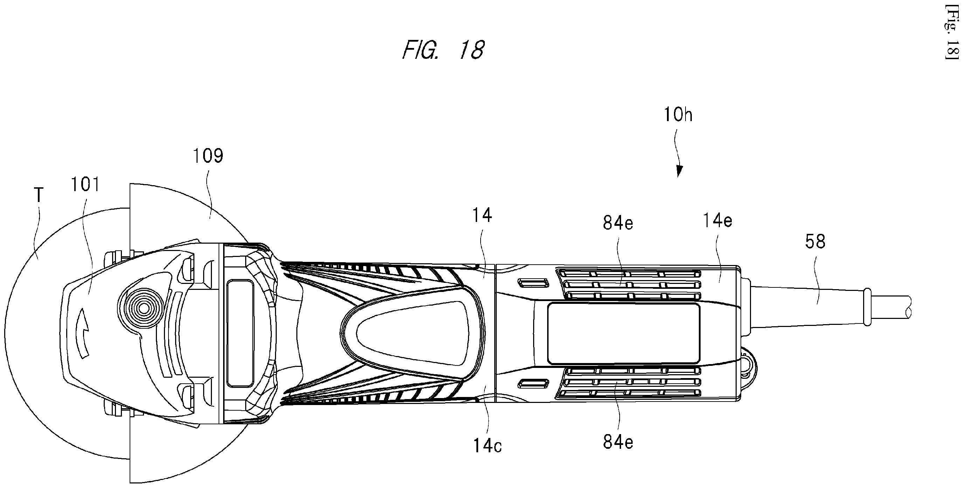

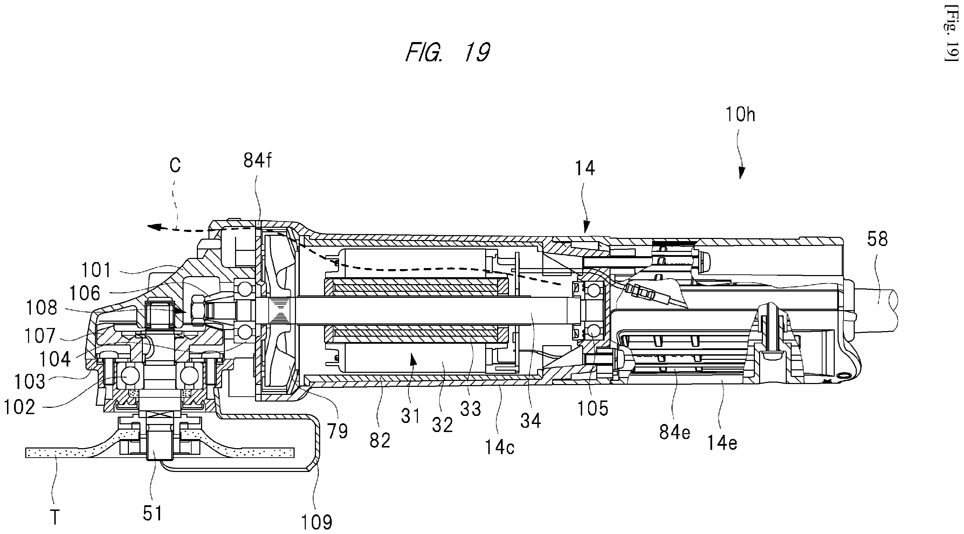

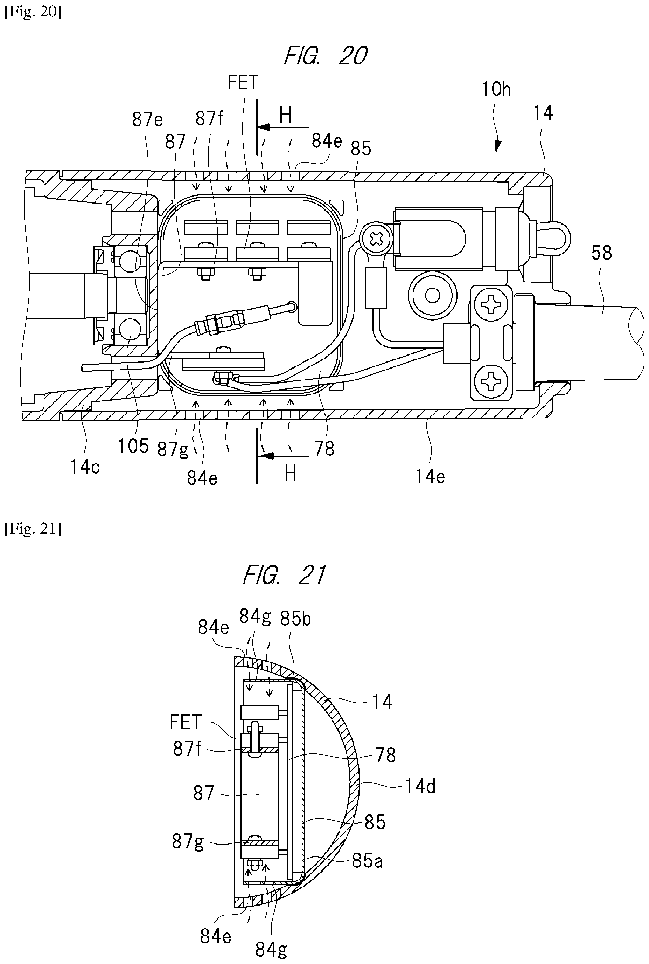

Fig. 18 is a plan view of a grinder 10h as another example of the electric power tool, and Fig. 19 is a longitudinal sectional view of the grinder 10h of Fig. 18. Fig. 20 is an enlarged sectional view of the interior of the base housing of the grinder, and Fig. 21 is a sectional view of Fig. 20 taken along a line H-H.

The grinder 10h has the motor housing 14c housing the brushless motor 31 therein, and a base housing 14e is attached to the base end of the motor housing 14c. Both motor housing 14c and base housing 14e are made of aluminum alloy and jointly form the housing 14 of the grinder 10h. The motor 31 has the cylindrical stator 32 wound with coils and the rotor 33 incorporated in the stator 32 in the same manner as the above described motor 31. The rotor 33 is fitted with the output shaft 34, which outputs the rotating drive force of the motor 31.

A grinding head, i.e., tool head 101 is attached detachably to the tip of the motor housing 14c, and the tip of the output shaft 34 projects into the tool head 101. On the tool head 101, the rotation transmission shaft 51 set perpendicular to the output shaft 34 is supported rotatably via a bearing 102, and a grindstone serving as the tip tool "T" is attached to the rotation transmission shaft 51. The bearing 102 is fitted to an annular retainer 103 attached to the front face of the tool head 101. The tip of the output shaft 34 is supported by a bearing 104 fitted to the tool head 101, while the rear end part of the output shaft 34 is supported by a bearing 105 attached to the housing 14c. To transmit the rotation of the output shaft 34 to the rotation transmission shaft 51, a driving bevel gear 106 is attached to the tip of the output shaft 34 while a driven bevel gear 107, which engages with the driving bevel gear 106, is attached to the rotation transmission shaft 51. When the brushless motor 31 is driven, the rotation transmission shaft 51 is driven via a motion transmission mechanism 108 composed of the bevel gear 106, etc. As a result, the grindstone, i.e., tip tool "T" is driven to rotate. The retainer 103 is provided with a grindstone cover 109 covering the rear of the tip tool "T".

The fan 79 is provided to the tip of the output shaft 34, and generates cooling air in the housing 14. A plurality of air holes 84e are formed on the base housing 14e, and an air hole 84f is formed between the tip of the housing 14 and the tool head 101. As a result, when the motor 31 is driven, cooling air generated inside the housing 14 by the fan 79 flows through the cooling air channel "C" leading from the base end of the housing 14 to its tip, as shown by a broken line arrow.

In the base housing 14e, the control board 78 is disposed adjacent to the motor housing 14c made of aluminum alloy, as shown in Figs. 20 and 21. The heat sink 87 is attached to the control board 78, and has an abutment wall 87e extending in the width direction of the housing 14 and abutted against the motor housing 14c and vertical walls 87f and 87g extending from both ends of the abutment wall 87e in the longitudinal direction of the housing 14. The vertical wall 87f has the switching element FET mounted thereon. In this manner, because the switching element FET is mounted on the heat sink 87 in contact with the motor housing 14c near the bearing, the aluminum motor housing 14c is connected to the switching element FET via the heat sink 87. Hence, the switching element FET can be cooled by the motor housing 14c.

The control board 78 is provided to the pedestal board 85, which extends in the longitudinal direction of the housing 14 and is fixed to the base housing 14e. The pedestal board 85 has a bottom wall 85a and side walls 85b connected integrally to the outer periphery of the bottom wall 85a. On the side walls 85b, air holes 84g are formed to be counter to the air holes 84e. As a result, when the fan 79 is driven to rotate, outer air flows through the air holes 84e into the housing 14, in which the incoming outer air flows through the air holes 84g to hit the switching element FET in the pedestal board 85, thus cooling the control board 78, the heat sink 87, and the switching element FET. The incoming outer air having passed through the air holes 84e flows along the control board 78 and then flows through the motor 31 to be finally discharged out of the air hole 84f.

As shown in Fig. 20, the pedestal board 85 functioning as a heat sink is in contact with the motor housing 14c made of aluminum alloy. However, a gap may be formed between the pedestal board 85 and the motor housing 14c.

The present invention is not limited to the above embodiments, and may be modified into various forms without departing from the scope of the invention. For example, while the electric power tool shown in the drawings is actuated with power from a commercial power supply, the present invention may be applied to a battery-powered electric power tool which is actuated with power from secondary battery cells in a battery case housed in the housing 14. Furthermore, the present invention applies not only to the hammer drill and the grinder but also to other types of electric power tools whose tip tool is driven by the brushless motor.

## Claims

1. An electric power tool comprising:
a brushless motor (31) covered with a resin motor case (82), the brushless motor (31) having a rotor (33), an output shaft (34) fixed to the rotor (33) and supported by bearings, and a cylindrical stator (32) wound with coils and covered with the motor case, the brushless motor (31) driving a tip tool (T); and
a motor housing (14c) made of aluminum alloy, the motor housing (14c) at least partly covering the motor case (82), the motor housing (14c) being exposed to outside air,
**characterized in that**:
the electric power tool further comprises:
a fan (79) provided to a tip of the output shaft (34), an outer periphery of the fan (79) being covered with a cylindrical fan case; and
a control board (78) having a control circuit for controlling the rotation of the motor (31), the control board (78) being housed in a pedestal board (85) and, disposed adjacent to the motor housing (14c) and fixed axially along an outer peripheral surface of the motor housing (14c), wherein
a heat dissipation space (89) through which cooling air passes is formed between the control board (78) and the motor housing (14c),
a bottom cover is attached to the housing,
the motor case (82) is interposed between the motor housing (14c) and the motor (31),
the bottom cover is formed with air holes (84a) and the motor housing has an air hole (38a) that is formed on opposite side of the fan (79) so that the brushless motor (31) is disposed between the air hole (38a) and the fan (79) in the axial direction of the rotor (33), and cooling air generated by the fan (79) passes through the air hole (38a),
the fan is configured to generate cooling air that passes through a gap between the stator (32) and the rotor (33) after passing through the air hole (38a), and flows along an exterior of the motor housing (14c) through the air hole (84a).

2. The electric power tool according to claim 1, comprising a plurality of projections (88) so formed on the motor housing (14c) as to project outward, wherein the control board (78) is connected to the motor housing (14c) via the projections (88), and sections of the heat dissipation spaces (89) are formed by the motor housing (14c), the projections (88), and the control board (78).

3. The electric power tool according to claim 1, wherein the control board (78) is provided with a heat sink (87) which is set in contact with or disposed close to the motor housing (14c).

4. The electric power tool according to claim 1, wherein a cooling passage (83) which guides outer air is formed between the motor case (82) and the motor housing (14c).

5. The electric power tool according to claim 4, wherein the cooling passage (83) is formed by a groove formed axially on at least one of an outer peripheral surface of the motor case (82) and an inner peripheral surface of the motor housing (14c).

6. The electric power tool according to claim 1, wherein the control board (78) is provided with detecting means (74) for detecting a rotation position of the motor (31).

7. The electric power tool according to claim 1, comprising a speed setting means (62) which is operated by a worker to set a rotating speed of the motor (31), wherein the speed setting means (62) is disposed on the control board (78).

8. The electric power tool according to claim 1, comprising:
a tool holder (12) which holds the tip tool (T);
a motion converting mechanism (47) for converting the rotation of an output shaft (34) of the motor (31) into reciprocation of the tool holder (12), the reciprocation being made in a direction perpendicular to the output shaft (34);
a handle (28) disposed closer to a base end of the tool holder (12);
a crankshaft (41) which transmits a torque of the output shaft (34) to the motion converting mechanism (47); and
a housing (14) of the electric power tool, the housing (14) including the motor housing (14c) and a gear housing (14b) having the motion converting mechanism (47) and the crankshaft (41) housed in the gear housing (14b),
wherein the motor (31) is disposed so that the output shaft (34) is perpendicular to a direction of the reciprocation of the tool holder (12),
wherein the handle (28) has a body (28a) and two legs (28b and 28c) formed on both ends of the body (28a) such that they are separated from each other across the body (28a) and are attached to a rear end part of the housing (14), and
wherein one of the legs (28b) is disposed closer to the gear housing (14b) while the other of the legs (28c) is disposed closer to the motor housing (14c).

9. The electric power tool according to claim 8, wherein a speed setting means (62) operated by a worker to set a rotating speed of the motor (31) is disposed in the handle (28).

10. The electric power tool according to claim 8, wherein the control board (78) is disposed between the other of the legs (28c) and the motor (31).

11. The electric power tool according to claim 8, wherein cooling air is guided through interior of the motor housing (14c) and is guided along outer periphery of the motor housing (14c) and along the control board (78).

12. The electric power tool according to claim 1, comprising:
a tool head (101) having a rotation transmission shaft (51) to which the tip tool (T) is attached, the tool head (101) being attached to a tip of the motor housing (14c);
a motion converting mechanism (108) for converting the rotation of an output shaft (34) of the motor (31) into the rotation of the rotation transmission shaft (51) perpendicular to the output shaft (34); and
a base housing (14e) attached to a rear end part of the motor housing (14c), the base housing (14e) having cooling air channel formed so as to lead to the motor (31), wherein the control board (78) is disposed in the base housing (14e).

## Patentansprüche

1. Elektrowerkzeug, umfassend:
einen bürstenlosen Motor (31), der mit einer Motorabdeckung aus Harz (82) abgedeckt ist; wobei der bürstenlose Motor (31) einen Rotor (33), eine am Rotor (33) befestigte Abtriebswelle (34) und Lager aufweist, und einen mit Spulen umwickelten und mit der Motorabdeckung abgedeckten zylindrischen Stator (32) aufweist, wobei der bürstenlose Motor (31) ein Spitzenwerkzeug (T) antreibt; und
ein Motorgehäuse (14c) aus einer Aluminiumlegierung, wobei das Motorgehäuse (14c) die Motorabdeckung (82) zumindest teilweise abdeckt und das Motorgehäuse (14c) der Außenluft ausgesetzt ist,
**dadurch gekennzeichnet, dass**:
das Elektrowerkzeug weiterhin aufweist:
ein Gebläse (79), das an einer Spitze der Abtriebswelle (34) vorgesehen ist, wobei ein Außenumfang des Gebläses (79) mit einem zylindrischen Gebläsegehäuse abgedeckt ist, und
eine Steuerplatine (78) mit einer Steuerschaltung zum Steuern der Motorumdrehung (31), wobei die Steuerplatine (78) in einer Sockelplatte (85) untergebracht ist, und angrenzend an das Motorgehäuse (14c) angeordnet und axial entlang einer äußeren Umfangsfläche des Motorgehäuses (14c) befestigt ist, wobei
ein Wärmeableitungsraum (89), durch den Kühlluft strömt, zwischen der Steuerplatine (78) und dem Motorgehäuse (14c) ausgebildet ist,
eine Bodenabdeckung am Gehäuse befestigt ist,
die Motorabdeckung (82) zwischen dem Motorgehäuse (14c) und dem Motor (31) angeordnet ist,
die Bodenabdeckung mit Luftlöchern (84a) versehen ist und das Motorgehäuse ein Luftloch (38a) aufweist, das auf der gegenüberliegenden Seite des Gebläses (79) so ausgebildet ist, dass der bürstenlose Motor (31) zwischen dem Luftloch (38a) und dem Gebläse (79) in Axialrichtung des Rotors (33) angeordnet ist, und die vom Gebläse (79) erzeugte Kühlluft durch das Luftloch (38a) strömt,
das Gebläse konfiguriert ist, um Kühlluft zu erzeugen, die durch einen Spalt zwischen dem Stator (32) und dem Rotor (33) strömt, nachdem sie durch das Luftloch (38a) hindurchgetreten ist, und entlang einer Außenseite des Motorgehäuses (14c) durch das Luftloch (84a) strömt.

2. Elektrowerkzeug nach Anspruch 1, umfassend eine Vielzahl von Vorsprüngen (88), die so auf dem Motorgehäuse (14c) ausgebildet sind, dass sie nach außen vorstehen, wobei die Steuerplatine (78) über die Vorsprünge (88) mit dem Motorgehäuse (14c) verbunden ist, und Abschnitte der Wärmeableitungsräume (89) durch das Motorgehäuse (14c), die Vorsprünge (88) und die Steuerplatine (78) gebildet sind.

3. Elektrowerkzeug nach Anspruch 1, wobei die Steuerplatine (78) mit einem Kühlkörper (87) versehen ist, der in Kontakt mit oder in der Nähe des Motorgehäuses (14c) angeordnet ist.

4. Elektrowerkzeug nach Anspruch 1, wobei ein Kühlkanal (83), der Außenluft führt, zwischen der Motorabdeckung (82) und dem Motorgehäuse (14c) ausgebildet ist.

5. Elektrowerkzeug nach Anspruch 4, wobei der Kühlkanal (83) durch eine Nut gebildet ist, die axial auf einer der äußeren Umfangsflächen der Motorabdeckung (82) und/oder einer inneren Umfangsfläche des Motorgehäuses (14c) ausgebildet ist.

6. Elektrowerkzeug nach Anspruch 1, wobei die Steuerplatine (78) mit einer Erfassungseinrichtung (74) zum Erfassen einer Drehposition des Motors (31) versehen ist.

7. Elektrowerkzeug nach Anspruch 1, umfassend ein Drehzahleinstellmittel (62), das von einem Arbeiter betätigt wird, um eine Drehgeschwindigkeit des Motors (31) einzustellen, wobei das Drehzahleinstellmittel (62) auf der Steuerplatine angeordnet ist (78).

8. Elektrowerkzeug nach Anspruch 1, umfassend:
einen Werkzeughalter (12), der das Spitzenwerkzeug (T) hält;
einen Bewegungsumwandlungsmechanismus (47) zum Umwandeln der Drehung einer Abtriebswelle (34) des Motors (31) in eine Hin- und Herbewegung des Werkzeughalters (12), wobei die Hin- und Herbewegung in einer Richtung senkrecht zur Abtriebswelle (34) erfolgt;
einen Griff (28), der näher an einem Basisende des Werkzeughalters (12) angeordnet ist;
eine Kurbelwelle (41), die ein Drehmoment der Abtriebswelle (34) auf den Bewegungsumwandlungsmechanismus (47) überträgt; und
ein Gehäuse (14) des Elektrowerkzeugs, wobei das Gehäuse (14) das Motorgehäuse (14c) und ein Getriebegehäuse (14b) mit dem Bewegungsumwandlungsmechanismus (47) und der im Getriebegehäuse (14b) untergebrachten Kurbelwelle (41) umfasst,
wobei der Motor (31) so angeordnet ist, dass die Abtriebswelle (34) senkrecht zu einer Richtung der Hin- und Herbewegung des Werkzeughalters (12) verläuft,
wobei der Griff (28) einen Körper (28a) und zwei Schenkel (28b und 28c) aufweist, die an beiden Enden des Körpers (28a) derart ausgebildet sind, dass sie über den Körper (28a) voneinander getrennt sind und an einem hinteren Endteil des Gehäuses (14) befestigt sind, und
wobei einer der Schenkel (28b) näher am Getriebegehäuse (14b) und der andere der Schenkel (28c) näher am Motorgehäuse (14c) angeordnet ist.

9. Elektrowerkzeug nach Anspruch 8, wobei eine Drehzahleinstellvorrichtung (62), die von einem Arbeiter betätigt wird, um eine Drehgeschwindigkeit des Motors (31) einzustellen, in dem Griff (28) angeordnet ist.

10. Elektrowerkzeug nach Anspruch 8, wobei die Steuerplatine (78) zwischen dem jeweils anderen der Schenkel (28c) und dem Motor (31) angeordnet ist.

11. Elektrowerkzeug nach Anspruch 8, wobei Kühlluft durch das Innere des Motorgehäuses (14c) geführt wird und entlang des äußeren Umfangs des Motorgehäuses (14c) und entlang der Steuerplatine (78) geführt wird.

12. Elektrowerkzeug nach Anspruch 1, aufweisend:
einen Werkzeugkopf (101) mit einer Rotationsübertragungswelle (51), an der das Spitzenwerkzeug (T) befestigt ist, wobei der Werkzeugkopf (101) an einer Spitze des Motorgehäuses (14c) befestigt ist;
einen Bewegungsumwandlungsmechanismus (108) zum Umwandeln der Drehung einer Abtriebswelle (34) des Motors (31) in die Drehung der Rotationsübertragungswelle (51) senkrecht zu der Abtriebswelle (34); und
ein Basisgehäuse (14e), das an einem hinteren Endteil des Motorgehäuses (14c) angebracht ist, wobei das Basisgehäuse (14e) einen Kühlluftkanal aufweist, der so ausgebildet ist, dass er zu dem Motor (31) führt, wobei die Steuerplatine (78) im Basisgehäuse (14e) angeordnet ist.

## Revendications

1. Outil à moteur électrique comprenant :
un moteur sans balais (31) couvert avec un carter de moteur en résine (82), le moteur sans balais (31) ayant un rotor (33), un arbre de sortie (34) fixé au rotor (33) et supporté par des paliers, et un stator cylindrique (32) enroulé avec des bobines et couvert avec le carter de moteur, le moteur sans balais (31) entraînant un outil terminal (T) ; et
un boîtier de moteur (14c) réalisé en alliage d'aluminium, le boîtier de moteur (14c) recouvrant au moins partiellement le carter de moteur (82), le boîtier de moteur (14c) étant exposé à l'air extérieur,
**caractérisé en ce que** :
l'outil à moteur électrique comprend en outre :
un ventilateur (79) prévu à une extrémité de l'arbre de sortie (34), une périphérie extérieure du ventilateur (79) étant couverte avec un carter de ventilateur cylindrique ; et
une carte de commande (78) ayant un circuit de commande pour commander la rotation du moteur (31), la carte de commande (78) étant logée dans une carte socle (85) étant disposée adjacente au boîtier de moteur (14c) et fixée axialement le long d'une surface périphérique extérieur du boîtier de moteur (14c), dans lequel
un espace de dissipation de chaleur (89) à travers lequel de l'air de refroidissement passe est formé entre la carte de commande (78) et le boîtier de moteur (14c),
un couvercle inférieur est attaché au boîtier,
le carter de moteur (82) est interposé entre le boîtier de moteur (14c) et le moteur (31),
le couvercle inférieur est formé avec des trous à air (84a) et le boîtier de moteur a un trou à air (38a) qui est formé sur un côté opposé du ventilateur (79) de sorte que le moteur sans balais (31) est disposé entre le trou à air (38a) et le ventilateur (79) dans la direction axiale du rotor (33), et l'air de refroidissement généré par le ventilateur (79) passe à travers le trou à air (38a),
le ventilateur est configuré pour générer de l'air de refroidissement qui passe à travers un intervalle entre le stator (32) et le rotor (33) après être passé à travers le trou à air (38a), et s'écoule le long d'un extérieur du boîtier de moteur (14c) à travers le trou à air (84a).

2. Outil à moteur électrique selon la revendication 1, comprenant une pluralité de projections (88) ainsi formées sur le boîtier de moteur (14c) qu'elles se projettent vers l'extérieur, dans lequel la carte de commande (78) est connectée au boîtier de moteur (14c) via les projections (88), et des sections des espaces de dissipation de chaleur (89) sont formées par le boîtier de moteur (14c), par les projections (88), et par la carte de commande (78).

3. Outil à moteur électrique selon la revendication 1, dans lequel la carte de commande (78) est dotée d'un puits de chaleur (87) qui est placé en contact avec ou disposé à proximité du boîtier de moteur (14c).

4. Outil à moteur électrique selon la revendication 1, dans lequel un passage de refroidissement (83) qui guide l'air extérieur est formé entre le carter de moteur (82) et le boîtier de moteur (14c).

5. Outil à moteur électrique selon la revendication 4, dans lequel le passage de refroidissement (83) est formé par une gorge formée axialement sur au moins une surface parmi une surface périphérique extérieure du carter de moteur (82) et une surface périphérique intérieure du boîtier de moteur (14c).

6. Outil à moteur électrique selon la revendication 1, dans lequel la carte de commande (78) est dotée de moyens de détection (74) pour détecter une position de rotation du moteur (31).

7. Outil à moteur électrique selon la revendication 1, comprenant un moyen de réglage de vitesse (62) qui est actionné par un opérateur pour régler une vitesse de rotation du moteur (31), dans lequel le moyen de réglage de vitesse (62) est disposé sur la carte de commande (78).

8. Outil à moteur électrique selon la revendication 1, comprenant :
un porte-outil (12) qui porte l'outil terminal (T) ;
un mécanisme de conversion de mouvement (47) pour convertir la rotation d'un arbre de sortie (34) du moteur (31) en un mouvement de va-et-vient du porte-outil (12), le mouvement de va-et-vient étant effectué dans une direction perpendiculaire à l'arbre de sortie (34) ;
une poignée (28) disposée plus proche d'une extrémité de base du porte-outil (12) ;
un vilebrequin (41) qui transmet un couple de l'arbre de sortie (34) au mécanisme de conversion de mouvement (47) ; et
un boîtier (14) de l'outil à moteur électrique, le boîtier (14) incluant le boîtier de moteur (14c) et un boîtier de mécanisme (14b) ayant le mécanisme de conversion de mouvement (47) et le vilebrequin (41) logé dans le boîtier de mécanisme (14b),
dans lequel le moteur (31) est disposé de telle façon que l'arbre de sortie (34) est perpendiculaire à une direction du mouvement de va-et-vient du porte-outil (12),
dans lequel la poignée (28) a un corps (28a) et deux bras (28b et 28c) formés sur les deux extrémités du corps (28a) de telle façon qu'ils sont séparés l'un de l'autre à travers le corps (28a) et sont attachés à une partie d'extrémité arrière du boîtier (14), et
dans lequel l'un des bras (28b) est disposé plus proche du boîtier de mécanisme (14b) alors que l'autre des bras (28c) est disposé plus proche du boîtier de moteur (14c).

9. Outil à moteur électrique selon la revendication 8, dans lequel un moyen de réglage de vitesse (62) actionné par un opérateur pour régler une vitesse de rotation du moteur (31) est disposé dans la poignée (28).

10. Outil à moteur électrique selon la revendication 8, dans lequel la carte de commande (78) est disposée entre l'autre bras (28c) et le moteur (31).

11. Outil à moteur électrique selon la revendication 8, dans lequel de l'air de refroidissement est guidé à travers l'intérieur du boîtier de moteur (14c) et est guidé le long de la périphérie extérieure du boîtier de moteur (14c) et le long de la carte de commande (78).

12. Outil à moteur électrique selon la revendication 1, comprenant :
une tête à outil (101) ayant un arbre de transmission de rotation (51) auquel est attaché l'outil terminal (T), la tête à outil (101) étant attachée à une extrémité du boîtier de moteur (14c) ;
un mécanisme de conversion de mouvement (108) pour convertir la rotation d'un arbre de sortie (34) du moteur (31) en une rotation de l'arbre de transmission de rotation (51) perpendiculaire à l'arbre de sortie (34) ; et
un boîtier de base (14e) attaché à une partie d'extrémité arrière du boîtier de moteur (14c), le boîtier de base (14e) ayant un canal pour air de refroidissement formé de manière à mener jusqu'au moteur (31), dans lequel la carte de commande (78) est disposée dans le boîtier de base (14e).
